# EUROPEAN PATENT APPLICATION

(11) **EP 1 936 566 A1**
(43) Date of publication of application: **25.06.2008**
(21) Application number: 06301293.4
(22) Date of filing: 22.12.2006
(51) Int. Cl.: G06T 7/00

(54) **Method for creating the saliency map of an image and system for creating reduced pictures of video frames**

(71) Applicant: Thomson Licensing, 92100 Boulogne-Billancourt (FR)
(72) Inventor: Oisel, Lionel, 92648 BOULOGNE CEDEX (FR); Le Meur, Olivier, 92648 BOULOGNE CEDEX (FR); Demarty, Claire-Hélène, 92648 BOULOGNE CEDEX (FR)
(74) Representative: Huchet, Anne

(57) **Abstract**

The invention concerns a method and a device for creating the saliency map of an image. The method comprises a step to take into account high level features related to the content of the image in order to establish the saliency map.

## Description

The invention concerns a method and a device to establish the saliency map of an image.

The increase use of mobile terminals having lower capacities than desktop devices or conventional television sets, leads to the needs of adapting the content to be displayed on conventional devices to portable devices. Moreover, the huge amount of available audio and video data strengthens these needs in day-to-day life.
Content repurposing is an adapted solution to deal with the display of these video data on low-capacity devices.

Picture/video material coming from one particular network or well suited to a particular display's size is adapted to meet the constraints of another one. As manually repurposing of images is in most cases unconceivable, the usual way to display a large image on small screen is to dramatically down sample the picture. The reduced picture is commonly called thumbnail. Nevertheless, such a conventional approach often yields unworkable pictures because important objects of the scene could be unrecognizable
Some broadcasters, such as cell phone operators propose more and more offers related to the display of sport events on cell phones by providing special services.

The invention proposes a new method to provide an adapted display of video content or still images on low facilities devices, such as for instance cell phones but is not limited to.

The invention proposes to establish a saliency map by taking into account some high level features of the content.

To this end, the invention proposes a method for creating the saliency map of an image. According to the invention, it comprises a step to take into account high level features related to the content of the image in order to establish the saliency map.

According to a preferred embodiment, the method comprises a step of detecting logo and incrustations in the image in order that these areas are not taken into account for establishing the saliency map.

Preferentially, the method comprises a step of classifying the image into at least three categories comprising:
- Large view images,
- Close up view images,
- Intermediate view images,

In an advantageous embodiment, when the image is classified as large view or intermediate view, it comprises a step for masking some areas of the image according to the high level features of the image in order that these areas are not taken into account for establishing the saliency map.

In a preferred embodiment, the method comprises a step to take into account the main events related to the content of the image data in order to establish the saliency map.

In a preferred embodiment the method comprises
- a step of selecting the most salient area obtained from the saliency map,
- a step of zooming on said selected salient area in order to obtain a thumbnail image preferably intended to be displayed on a low display capacity device, preferably a cell phone.

In a preferred embodiment the method comprises means to crop the image when the image is labeled as close-up-view image.

According to another aspect, the invention concerns a system for creating reduced pictures of video frames intended to be displayed on low display capacity devices. According to the invention, the system comprises
- means to extract low level and high level information from said video frames
- means to establish a saliency map for said video frames, taking into account the high level and the low level features of said video frames and their visual properties,
- means to obtain a reduced picture focused on the more salient area of each frame.

Other characteristics and advantages of the invention will appear through the description of a non-limiting embodiment of the invention, which will be illustrated, with the help of the enclosed drawing.
- figure 1 represents a method according to a preferred embodiment of the invention,
- figure 2 represents a device according to a preferred embodiment of the invention,
- figure 3 represents a system according to a preferred embodiment of the invention.
- figures 4a and 4b represent respectively an original image and its corresponding version in which the tribunes are masked.
- figure 5 a represents a close up view and figure 5b represents an intermediate view.

Embodiments of the present invention may be implemented in software, firmware, hardware or by any combination of various techniques. For example, in some embodiments, the present invention may be provided as a computer program product or software which may include a machine or computer-readable medium having stored thereon instructions which may be used to program a computer (or other electronic devices) to perform a process according to the present invention. In other embodiments, steps of the present invention might be performed by specific hardware component that contain hardwired logic for performing the steps, or by any combination of programmed computer components and custom hardware components.
Thus, a machine-readable medium may include any mechanism for storing or transmitting information in a form readable by a machine (for instance a computer). These mechanisms include, but are not limited to, floppy diskettes, optical disks, hard disk drives, holographic disks, compact disks read-only memory (CD-ROMs), magneto-optical disks, read-only memory (ROMs), random access memory (RAM), Erasable Programmable Read-only memory (EEPROM), magnetic or optical cards, flash memory, a transmission over the Internet, electrical, optical, acoustical or other forms of propagated signals (for instance carrier waves, infrared signals, digital signals, etc), or the like.
Unless specifically stated otherwise as apparent from the following discussion, it is appreciated that discussions utilizing terms such as "processing" or "computing" or "calculating" or "determining" or the like, may refer to the action and processes of a computer system, or similar electronic computing device, that manipulates and transforms data represented as physical quantities within the computer system memories or registers or other such information storage, transmission or display devices.
In the following detailed description of the embodiments, reference is made to the accompanying drawings that show, by way of illustration, specific embodiments in which the invention may be practices. In the drawings, like numeral describe substantially similar components throughout the several views. These embodiments are described in sufficient detail to enable those skilled in the art to practice the invention. Other embodiments may be utilized and structural, logical, and electrical changes may be made without departing from the scope of the present invention. Moreover, it is to be understood that the various embodiments of the invention, although different, are not necessarily mutually exclusive. For example, a particular feature, structure, or characteristic described in one embodiment may be included within other embodiments.

The preferred embodiment described in reference to the figures is related to a video of soccer.

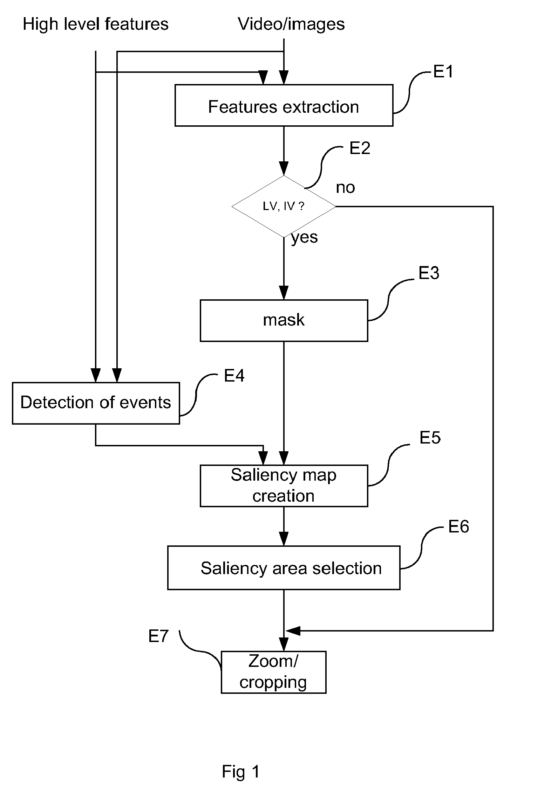

Figure 1 represents a method according to a preferred embodiment of the invention.

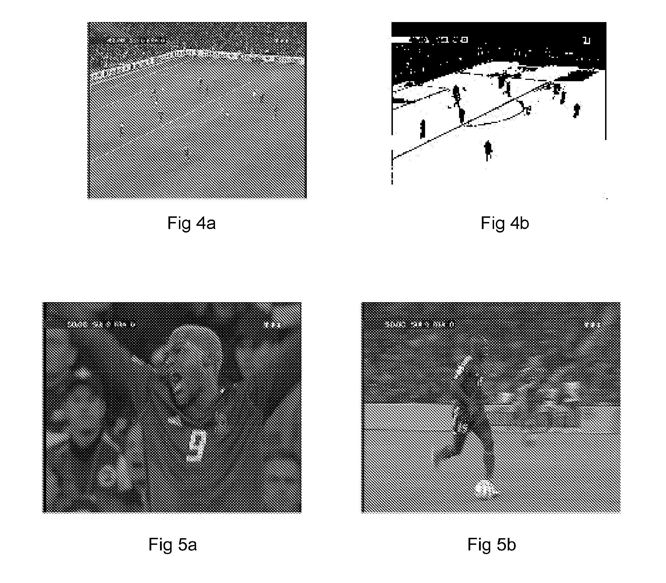

An input video is received, coming for instance from a camera, personal or professional, for instance video taken during a soccer game.
In a step E1, some features of this video are extracted. During this step, low level features are extracted, in order to be able to recognize later on the events occurring.
The low-level features extracted are related to the content of the video. It means that the features extraction is oriented according to the event captured by the camera. When the event is a soccer game, the extracted features are related to the grass, the players...
The most important events occur on the grass and not in the tribune. Therefore, thanks to image processing techniques well-known by the man skilled in the art, for instance by using color histogram thresholding, dominant color estimation, the tribunes and the grass are separated. A first binary map called BinGrassMap is therefore computed as illustrated on figure 4b representing a binary map of figure 4a.
Logos and incrustations are also detected, for instance incrustations representing the score and time, when the video has already been post-produced and is not directly computed from the camera.
A second binary map is then obtained, called BinLogoMap, indicating the position of logo and incrustations, using techniques well-known by the man skilled in the art such as static region detections, shaped-oriented object detection, text detection.
A video of soccer is also composed of several periods; this is also the case for other types of sports or even for films. Therefore, the different shots are identified and given a label.
Among those views, three categories are established:
- large view representing tribunes and grass, as shown on figure 4a for instance. This view is called LV in the following description.
- close up view, a zoom on a player for instance, as shown on figure 5a. This view is called CUV in the following description.
- intermediate view, as shown on figure 5b. This configuration is called in the following IV.

In order to detect these different views, several steps are carried on. First, it is required to detect the different shots. Then, thanks to techniques well-known by the man skilled in the art (see for example *"Audiovisual integration for tennis broadcast structuring",* Multimedia tools Application 2006, E. Kijak, G. Gravier, L. Oisel and P. Gros) by detecting the percentage of grass in the frame, the close-up view of faces, one can associate a label, LV, CUV, IV to each shot.

During step E1, the ball is also localized on the grass. Techniques for ball localization are well-known by the man-skilled in the art, for instance patent application US2003142210 discloses such a method of ball localisation. A map called BinBallPosition is also created, indicating the location of the ball in the image.
Other features can be extracted, such as player detection or face detection as far as sports events are concerned.

According to the type of view detected, a mask can be applied on the current frame. In a step E2, if the image is recognized as being of LV or IV type, a mask is applied on the frame. Otherwise, no mask is applied as the frame is considered as representing already a zoom on an important topic.

In a step E3, a mask is applied on the received input frames, when they are of LV or IV type, according to the corresponding binary maps obtained.
In order to apply the mask, the different binary maps obtained, namely BinGrassMap, BinLogoMap are projected on the video and the areas corresponding to the tribunes and to the logo/incrustations appear as black areas.
Therefore, once the different maps are projected on the frame of the video to which they correspond, a new frame is obtained in which the non-important areas are masked, using black areas.
This new frame is used in the next step, E5, to establish the saliency map.

In parallel, in a step E4, the video frames are analyzed in order to detect the key events that can occur. The key events are detected by analyzing the video frames with the help of high level features dedicated to the event. For a soccer game, one of the main events is a goal. Well-known techniques by the man skilled in the art enable the detection of goals using multimodal features extraction and structuration/fusion of these features to decide whether an event occurs or not, for instance document "soccer highlights detection and recognition using hmms, in IESSS ICME02, by J Assfalg et al. By multimodal features, we mean all features (low, middle or high levels) that can be extracted from the audio and video signals, such as type of shots, face close-up, goal post detection, public excitement, speaker excitement.
Of course, in other embodiments of the invention, when the video is not soccer representative, the events to be detected can be of another interest.

After steps E3 and steps E4, a saliency map is created in a step E5.
One advantage of the invention is that this saliency map is based on visual properties of the image but also on the content of the video.
Several methods for calculating the saliency map of an image are known by the man skilled in the art. Among those, patent application W02006/07263 filed in the name of Thomson Licensing on January 10, 2006 discloses an efficient method for calculating the saliency map of a video.
Such a method does not take into account the low level or the high level features of the video but is only based on the visual properties of the image. The invention proposes here to take into account these low-level and high level features to help the saliency map creation. Therefore, the saliency map is not calculated on the video frame as received but on modified video frames, modified in step E3 and also on the extracted events obtained from step E4.
For this, the video modified in step E3, does not contain any area, of no interest in a video representing soccer, that could be detected as salient area by a method for calculating the saliency as described in the above mentioned patent application.

The method receives as input the areas containing events that can be of interest for a video of soccer, such as goals and also the player and the ball localizations.
The method for calculating the saliency map takes into account the events using a hierarchical order of the events. When a goal is detected in a frame, the saliency map creation focuses on the area showing the goal, even if the saliency map creation method shows other salient areas in the frame based on visual properties. Therefore, on the final saliency map, the more salient area is the area representing the goal.
When the current frame does not represent a goal or an event, the saliency map creation takes into account the visual features and the low level features extracted, such as the ball localization, the player's localization. The obtained saliency map shows the more salient areas where the ball is located when a ball is detected or an area comprising many of the players when no ball is detected.
More generally, the common visual attention model used for building the saliency map, based on contrasts in common methods, receives the different information mentioned above such as the ball, players location, the different bin maps BinGrassMap, BinLogoMap and BinBallPosition obtained and the maps BinGrassMap and BinLogoMap are used as a mask (see step E3) so that no area of the tribunes, no logo are taken into account for building the saliency map. The other information such as ball or player localization is used in order to make a modulation of the saliency map. A fusion is done issued from the visual attention model and from the low level and high level features in order to obtain a saliency map. Application W02006/072637 in the name of Thomson licensing published on July 13,2006 described the way to obtain an optimized fusion of saliency maps.

In a step E6, a saliency area is selected. In the described embodiment, the saliency area selected is the most salient area obtained in step E5.
In a step E7, the frames are zoomed or cropped in order to send a resized frame to the handheld device.
The area chosen for the zooming is the area selected in step E6 for the shots detected as large view (LV) or intermediate view (IV). For the shots detected as close up views (CUV), a cropping is done on the whole frames of the shot in order to display a reduced picture of the whole image.

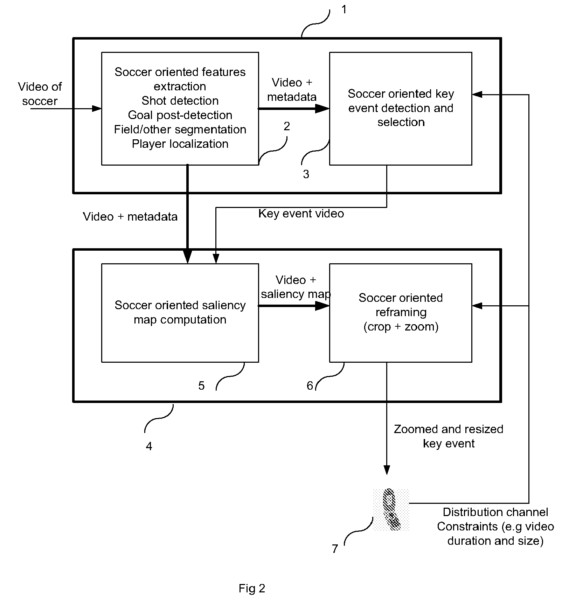

In Figure 2, the modules represented are functional units which may or may not correspond to physically distinguishable units. For example, these modules or some of them may be grouped together into a single component, or constitute functionalities of one and the same piece of software. *A contrario,* certain modules may possibly be composed of separate physical entities.

On figure 2, a device according to a preferred embodiment of the invention is represented.
A first module 1 is in charge of temporal repurposing and a second module 2 is in charge of spatial repurposing.
A video of soccer is input in the device. This video is received on a module 2 which is in charge of image processing. This module cuts the video into the different shots, detects the low-level features, as indicated in reference to figure 1, step E1, detects the type of view represented by each frame and the different localizations of the ball or the player, as mentioned in reference to figure 1, steps E2 to E3. The extracted features of the video are then encapsulated into metadata in order to be transferred to a module 3 in charge of detecting the different events occurring and to a module 5 for the saliency map computation. The metadata can be compliant with MXF standard for instance, in order to be transferred to external devices for instance.

The module 3 is in charge of detecting the events particular to a soccer game such as the goals, or other events in case of another event, as mentioned in reference to step E4 on figure 1.

The module 5 and a module 6 dedicated to reframing and zooming are part of the spatial repurposing.
The module 5 is in charge of calculating the saliency map. This module receives as input the video, the metadata and the key events in order to establish the saliency areas of the different frames. This module is designed to implement the method in accordance with step E6 in reference to figure 1.

The module 6 of reframing and zooming receives also as input some data from the handheld devices to which the video is intended or from the broadcasters, such as cell phone networks operators.
Indeed, the cell phone networks operators have some requirements regarding the network and for instance the bandwidth, requirements regarding the video length, the size...therefore these requirements can come from the cell phones but more generally are provided by the broadcasters.
The module 6 in charge of adapting the content of the video to the size of the display and to the network constraints, takes into account these parameters in order to reduce the size of the picture and the resolution of the picture to be suitable for the display.

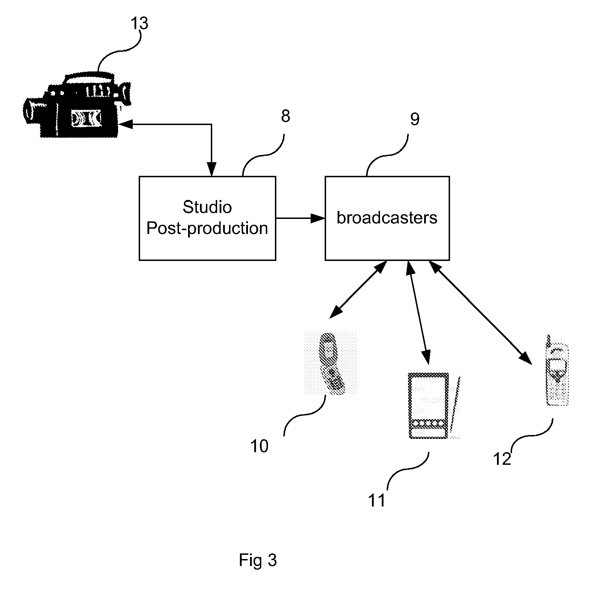

Figure 3 represents a system implementing the invention, in which the different devices are represented.
A video is captured by a camera 13, typically located close to a football ground.
The video captured is then transmitted to a post-production studio 8.
The post-production studio 8 is connected to the broadcasters 9, in charge of managing the network through which the video is transmitted to the different networks.
Modules 8 and modules 9 are in charge of adapting the content to the terminals and implement modules 1 and 2 of figures 2. More precisely, in this embodiment, modules 2, 3 and 5 are implemented in the studio post-production 8 and module 6 is implemented in the broadcaster;

Of course the invention is not limited to the described embodiment in reference to a soccer game but can be easily transposed to any other event. The difference with the described embodiment dedicated to soccer is mainly related to the kind of low-level and high level features.

## Claims

1. Method for creating the saliency map of an image **characterized in that** it comprises a step to take into account high level features related to the content of the image in order to establish the saliency map.

2. Method according to claim 1 **characterized in that** it comprises a step of detecting logo and incrustations in the image in order that these areas are not taken into account for establishing the saliency map.

3. Method according to claim 1 **characterized in that** it comprises a step of classifying the image into at least three categories comprising:
- Large view images,
- Close up view images,
- Intermediate view images,

4. Method according to claim 5 **characterized in that** when the image is classified as large view or intermediate view, it comprises a step for masking some areas of the image according to the high level features of the image in order that these areas are not taken into account for establishing the saliency map.

5. Method according to claim 1 **characterized in that** it comprises a step to take into account the main events related to the content of the image data in order to establish the saliency map.

6. Method according to one of the previous claims **characterized in that** it comprises
- a step of selecting the most salient area obtained from the saliency map,
- a step of zooming on said selected salient area in order to obtain a thumbnail image preferably intended to be displayed on a low display capacity device, preferably a cell phone.

7. Method according to claim 3 **characterized in that** it comprises a step to crop the image when the image is labeled as close-up-view image.

8. Device for creating the saliency map of an image **characterized in that** it comprises means to take into account high level features related to the content of the image in order to establish the saliency map.

9. System for creating reduced pictures of video frames intended to be displayed on low display capacity devices **characterized in that** it comprises
- means to extract low level and high level information from said video frames
- means to establish a saliency map for said video frames, taking into account the high level and the low level features of said video frames and their visual properties,
- means to obtain a reduced picture focused on the more salient area of each frame.
